# EUROPÄISCHE PATENTSCHRIFT

(11) **EP 3 056 087 B1**
(45) Veröffentlichungstag und Bekanntmachung des Hinweises auf die Patenterteilung: **30.08.2017**
(21) Anmeldenummer: 16151661.2
(22) Anmeldetag: 18.01.2016
(51) Int. Cl.: A21B 1/33, F24B 1/20, F24B 5/06

(54) **FESTBRENNSTOFFBACKVORRICHTUNG MIT ZENTRALER LUFTFÖRDEREINHEIT**
SOLID FUEL BAKING DEVICE WITH CENTRAL BLOWER UNIT
DISPOSITIF DE CUISSON DE CARBURANT SOLIDE AVEC UN VENTILATEUR COMMUN

(30) Priorität: 12.02.2015 DE 102015102009
(43) Veröffentlichungstag der Anmeldung: 17.08.2016
(73) Patentinhaber: Fritsch GmbH, 97348 Markt Einersheim (DE)
(72) Erfinder: BARTH, Fritz, 74336 Meimsheim (DE)
(74) Vertreter: advotec.

(56) Entgegenhaltungen:
- WO-A1-90/11475
- WO-A1-2006/125475
- WO-A1-2009/138281
- DE-A1-102010 020 430
- DE-A1-102013 214 120
- DE-U1- 8 433 995

## Beschreibung

Die Erfindung betrifft eine Backvorrichtung mit zumindest zwei Backöfen, welche jeweils zumindest zwei Holzbrennvorrichtungen aufweisen, gemäß dem Oberbegriff des Anspruchs 1.

Aus dem Stand der Technik sind verschiedene Ausführungsformen von Backvorrichtungen bekannt, wobei vorliegend diejenigen Backvorrichtungen betrachtet werden, welche mittels Holzbrennvorrichtungen beheizt werden, wobei es sich in aller Regel um Pelletbrenner handelt. Hierzu sind die Pelletbrenner auf der Rückseite der Backöfen angeordnet, wobei von einer Vorderseite der Backöfen die Einbringung der Teiglinge bzw. die Entnahme der gebackenen Brote erfolgen kann.

Aus dem Stand der Technik ist eine Vielzahl verschiedenster Ausführungsformen von Pelletbrennern bekannt, wobei jedoch eine Vielzahl hiervon nicht zur Beheizung eines Backofens geeignet ist. Dies resultiert aus der bei Backvorrichtungen üblichen Betriebsart der Pelletbrenner, wobei nur eine kurzzeitige Beheizung des Backofens erforderlich ist, während hingegen in den Zwischenzeiten der Pelletbrenner ausgeschaltet ist. Aufgrund dieser von einer regulären Heizaufgabe abweichenden Verfahrensweise können übliche Pelletbrenner aus dem Stand der Technik gerade nicht für derartige Backvorrichtungen eingesetzt werden.

Bewährt hat sich zumindest eine Ausführungsform von Pelletbrennern, bei denen in einer Brennermulde auf einem Rost liegend ein teilweiser Abbrand der eingebrachten Holzpellets erfolgt. In einem darüberliegenden Teil Reduktionsbereich erfolgt eine zumindest teilweise Reduktion des unverbrannten Holzbrennstoffs zu einem Brenngas, welches nachfolgend in einem Flammrohr sowie in einer hieraus austretenden Flamme vollständig verbrannt wird. Naheliegend bedarf es der Zufuhr von Luft bzw. von Sauerstoff zumindest in die Brennermulde zum teilweisen Abbrand der Holzpellets sowie zum Flammrohr zur Verbrennung des Brenngases. Zur Erzeugung einer vorteilhaften Flamme zur Beheizung des Backofens wird weiterhin durch eine Luftzufuhr im Reduktionsbereich ein teilweiser Ausbrand des Brenngases bewirkt.

Zum leistungsgeregelten Betrieb der Pelletbrenner weist jeder Pelletbrenner ein Gebläse zur Erzeugung der notwendigen Luftzufuhr auf. Hierbei erfolgt eine Aufteilung des Luftvolumenstroms vom Gebläse auf das Brennerrost, den Reduktionsbereich sowie das Flammrohr. Die Aufteilung erfolgt hierbei anhand eines zuvor ermittelten optimalen Betriebsbereichs, wobei nachfolgend ohne einen Umbau kein unmittelbarer Einfluss auf die Aufteilung der Luftmengen möglich ist.

Wenngleich bei vorheriger Ermittlung der optimalen Betriebszustände eine Variation der Luftmengen nicht erforderlich ist, so ist jedoch zu berücksichtigen, dass bei einer Mehrzahl von übereinander angeordneten Backöfen sich die Temperaturverhältnisse in den Backöfen aufgrund gegenseitiger Beeinflussung derartig ändern können, dass eine Anpassung der Betriebsweise des jeweiligen Pelletbrenners vorteilhaft wäre. Hierzu ist es im Stand der Technik lediglich möglich, die Leistung des Pelletbrenners insgesamt zu erhöhen oder zu reduzieren.

Hierbei wurde jedoch festgestellt, dass bei einem wechselhaften Betrieb der verschiedenen übereinander angeordneten Backöfen die gleichmäßige Aufheizung des Backraums nicht im gewünschten Maß gewährleistet ist.

Der nächstliegende Stand der Technik wird in dem Dokument DE 10 2010 020 430 A1 offenbart. Weiterer relevanter Stand der Technik ist aus den Dokumenten WO 2009/138281 A1, WO 2006/125475 A1, DE 10 2013 214 120 A1 sowie DE 84 33 995 U1 bekannt. Aufgabe der vorliegenden Erfindung ist es daher, den Betrieb der Backvorrichtung mit zumindest zwei Backöfen dahingehend zu optimieren, dass eine verbesserte gleichmäßige Aufheizung des jeweiligen Backraums der Backöfen unabhängig von dem jeweiligen Zustand des anderen Backofens erfolgen kann.

Die gestellte Aufgabe wird durch eine erfindungsgemäße Ausführungsform nach der Lehre des Anspruchs 1 gelöst.

Vorteilhafte Ausführungsformen der Erfindung sind Gegenstand der Unteransprüche.

Die gattungsgemäße Backvorrichtung umfasst zunächst einmal zumindest zwei Backöfen. Hinsichtlich der Ausführung der Backöfen kann auf bewährte Ausführungsformen zurückgegriffen werden, so dass sich eine diesbezügliche Erläuterung erübrigt. Zumindest weist jeder Backofen auf einer Vorderseite eine verschließbare Einschuböffnung auf, über die die Teiglinge in den Backofen eingebracht werden können und durch die das fertig gebackene Brot entnommen werden kann. Gegenüberliegend sind auf der Rückseite des Backofens zumindest zwei Brenneröffnungen vorhanden. Zur Ableitung von Rauchgas weist der Backofen des Weiteren zumindest eine Rauchgasöffnung auf.

Zur Beheizung des jeweiligen Backofens weist die Backvorrichtung weiterhin zumindest vier Holzbrennvorrichtungen auf, wobei vorteilhaft jedem Backofen zwei Holzbrennvorrichtungen zugeordnet sind. Die Holzbrennvorrichtungen wiederum besitzen eine Oxidationszone, in der Holzbrennstoff anteilig verbrannt werden kann. Naheliegend ist es, dass es zur Verwendung der Backofenvorrichtung einer Versorgungseinrichtung zur Zufuhr des Holzbrennstoffes in die Holzbrennvorrichtung bedarf, welche unabhängig von der gattungsgemäßen Ausführung aus vorhandenen Lösungen ausgewählt werden kann. Zumindest ist in der Holzbrennvorrichtung eine Einlassöffnung erforderlich, so dass der Holzbrennstoff zur Oxidationszone zugeführt werden kann. Im Anschluss an die Oxidationszone befindet sich eine Reduktionszone. Eine exakte Grenze zwischen der Oxidationszone und der Reduktionszone ist nicht vorhanden. Vielmehr ist in der Oxidationszone in Abhängigkeit von dem Sauerstoffgehalt und den Strömungsverhältnissen eine anteilige Reduktion des Holzbrennstoffs zu erwarten. In gleicher Weise erfolgt ebenso in der Reduktionszone eine anteilige Verbrennung des Holzbrennstoffs bzw. des zuvor erzeugten Brenngases. Insofern erfolgt die Aufteilung in Oxidationszone und Reduktionszone hinsichtlich des primären Zwecks des jeweiligen Bereichs der Holzbrennvorrichtung. An die Reduktionszone schließt sich eine Verbrennungszone an, in der das Brenngas zumindest anteilig verbrannt werden kann. Ein vollständiges Verbrennen des Brenngases sowie restlicher unverbrannter Holzbrennstoffbestandteile kann bereits in der Verbrennungszone stattfinden. Jedoch wird in aller Regel ein Austreten von Flammen in den Backofen hinein gefordert, so dass sich die Verbrennung aus der Verbrennungszone der Holzbrennvorrichtung in den Backofen fortsetzt.

Zur Gewährleistung der Verbrennung in der Oxidationszone sowie in der Verbrennungszone ist es erforderlich, dass Luft bzw. Sauerstoff zur jeweiligen Zone zugeführt werden kann. Darüber hinaus ist vorgesehen, dass ebenso in den Reduktionsbereich eine Zufuhr von Luft bzw. Sauerstoff erfolgen kann. Hierzu weisen die drei Zonen jeweils Luftzuführungen auf, über die ein Zustrom an Luft bzw. Sauerstoff erfolgen kann. Weiterhin bedarf es naheliegend eines Mittels zur Erzeugung eines Luftvolumenstroms zu den jeweiligen Luftzuführungen der einzelnen Holzbrennvorrichtungen.

Zur Vereinfachung der Backvorrichtung wird anstelle eines an jeder Holzbrennvorrichtung angeordneten Gebläses erfindungsgemäß eine zentrale Luftfördereinheit eingesetzt. Zur Versorgung der Holzbrennvorrichtungen wird die Luftfördereinheit über Luftkanäle mit den jeweiligen Luftzuführungen der einzelnen Zonen der mehreren Holzbrennvorrichtungen verbunden. Wenngleich bei der Realisierung einer Backvorrichtung hierdurch nicht eine vollständige Holzbrennvorrichtung samt eigener Luftversorgung zur Verwendung in beliebiger Anzahl zur Verfügung steht, sondern für unterschiedliche Backvorrichtungen mit stark variierender Zahl an Backöfen und somit mit einer schwankenden Anzahl an erforderlichen Holzbrennvorrichtungen unterschiedliche Luftfördereinheiten erforderlich sein können, so reduziert dies dennoch den Aufwand für die jeweils betrachtete Backofenvorrichtung.

Zur Erhöhung der Betriebsbereitschaft der Backvorrichtung kann darüber hinausgehend eine parallele zweite zentrale Luftfördereinheit vorgesehen sein, welche entweder zeitgleich betrieben wird oder für den Fall des Ausfalles der ersten zentralen Luftfördereinheit vorgehalten wird. Zumindest ist die Verwendung von zwei zentralen Luftfördereinheiten erst sinnvoll, wenn die Backvorrichtung mehrere, beispielsweise acht oder mehr, Backöfen aufweist.

Zur Verbesserung der Regelbarkeit der einzelnen Holzbrennvorrichtungen zur Erzielung eines optimierten Betriebs - um im Ergebnis eine optimale Aufheizung des jeweiligen Backofens zu erreichen - wird erfindungsgemäß zwischen den von der Luftfördereinheit wegführenden Luftkanälen und den zu den Holzbrennvorrichtungen führenden Luftzuführungen jeweils ein motorisch gesteuertes Drosselelement angeordnet.

Aufgrund der gegenseitigen Beeinflussung der Stellung der jeweiligen Drosselelemente unter Berücksichtigung des Betriebs der zentralen für zumindest vier Holzbrennvorrichtungen vorgesehenen Luftfördereinheit ist es weiterhin vorgesehen, dass die zentrale Luftfördereinheit sowie die Drosselelemente von einer zentralen Backsteuerung angesteuert werden.

Der optimale Luftvolumenstrom wird individuell anhand der Aufheizrate im Backofen und der anzunehmenden Flammausbreitung gesteuert. Durch die motorisch gesteuerten Drosselelemente kann somit in Abhängigkeit von den jeweiligen Temperaturzuständen der verschiedenen Backöfen und mit der einhergehenden Beeinflussung der Backöfen gegenseitig eine Anpassung an die Flammausbreitung in den Backraum dergestalt vorgenommen werden, dass die Luftzufuhr zwischen Oxidationszone, Reduktionszone und Verbrennungszone variiert werden kann. Naheliegend ist es, dass ebenso die Leistung der jeweiligen Holzbrennvorrichtung analog der bisherigen Ausführung durch insgesamte Erhöhung der Luftmenge bzw. Reduzierung der Luftmenge verändert werden kann.

Hinsichtlich der Ausführung der Backöfen ist es - analog den Ausführungen aus dem Stand der Technik - vorteilhaft, wenn jeder Backofen zumindest zwei Rauchgasöffnungen aufweist. Diese sind hierzu vorteilhafterweise auf gegenüberliegenden Seiten im vorderen Bereich des Backofens angeordnet. Somit erfolgen eine vorteilhafte Ausbreitung der in den Backofen hineinreichenden Verbrennungsflamme aus der Verbrennungszone und eine optimale Wärmeverteilung durch die Flamme bzw. das heiße Rauchgas innerhalb des Backofens.

Ergänzend werden vorteilhafterweise die Rauchgasöffnungen der einzelnen Backöfen über einen Rauchgaskanal zu einem gemeinsamen Rauchgaskamin geführt, so dass eine Ableitung der Rauchgase über einen Rauchgaskamin erfolgen kann.

Zur weiteren Beeinflussung der Leistung der Holzbrennvorrichtung und der Aufheizrate im jeweiligen Backofen wird in besonders vorteilhafter Weise in jedem Rauchgaskanal eine motorisch verstellbare von der Backsteuerung steuerbare Rauchgasklappe angeordnet. Somit kann weiterhin die durch den Backofen strömende Menge bzw. die Geschwindigkeit des Rauchgases beeinflusst werden. Darüber hinaus kann es vorteilhaft sein, wenn ebenso im Rauchgaskamin eine von der Backsteuerung motorisch steuerbare Kaminklappe angeordnet ist. In Abhängigkeit von den Strömungsverhältnissen im Backofen sowie insbesondere zur Vermeidung eines Austritts von Rauchgas aus dem Backofen ist es besonders vorteilhaft, wenn im Rauchgaskamin ein von der Backsteuerung regelbarer Ventilator eingesetzt wird, so dass kein unerwünschter Überdruck im Backofen entsteht.

Der Betrieb der Backvorrichtung erfolgt zunächst analog bekannter Ausführungen mit Holzbrennvorrichtungen, welche eine Oxidationszone, eine Reduktionszone und eine Verbrennungszone aufweisen. Hierzu sind für den regulären Betrieb der Backvorrichtung optimierte Einstellungen für die Luftzufuhr in die einzelnen Zonen zu ermitteln. Entsprechend können von der Backsteuerung die zu der jeweiligen Holzbrennvorrichtung gehörenden Drosselelemente auf einen vorgegebenen Sollwert eingestellt werden. Bei dem durch die neuartige Backvorrichtung realisierbaren erfindungsgemäßen Verfahren wird zur Erhöhung der Aufheizrate eines Backofens nunmehr ergänzend zur Erhöhung der Leistung der Luftfördereinheit zusätzlich die Stellung der zur jeweiligen Holzbrennvorrichtung gehörenden Drosselelemente derartig geändert, dass diese durch eine zunehmende Öffnung einen größeren Luftdurchsatz zur jeweiligen Holzbrennvorrichtung ermöglichen. Analog wird bei einer erforderlichen Reduzierung der Aufheizrate eines Backofens die Leistung der Luftfördereinheit reduziert, wobei die Drosselelemente der zum jeweiligen Backofen führenden Luftzuführungen weiter geschlossen werden. Es ist naheliegend, dass es möglich ist, eine Erhöhung des Luftvolumenstroms zu einer Holzbrennvorrichtung zu erreichen, indem die Drosselelemente sämtlicher weiterer Holzbrennvorrichtungen weiter geschlossen werden.

Besonders vorteilhaft wird die Verwendung der Backvorrichtung mit zentraler Luftfördereinheit, wenn zur Anpassung der Wärmeverteilung innerhalb des Backofens eine Variation der Stellung der zur jeweiligen Holzbrennvorrichtung gehörenden Drosselelemente vorgenommen wird. Hierbei erfolgt insbesondere eine Verstellung des zur Verbrennungszone der jeweiligen Holzvorrichtung gehörenden Drosselelements. Derartiges ist im Stand der Technik mangels der Möglichkeit der Verstellung von Drosselelementen nicht gegeben.

Hierzu kann in besonders vorteilhafter Weise zur Erhöhung des Wärmeeintrags in einem vorderen Teil des Backofens das zur Verbrennungszone gehörende Drosselelement weiter geöffnet werden. Somit erfolgt eine tiefere Flammausbreitung in den Backraum hinein, so dass sich der Wärmeeintrag in den vorderen Bereich verschiebt. Hierzu ist es weiterhin besonders vorteilhaft, wenn bei einer erforderlichen Reduzierung des Wärmeeintrags im hinteren Teil des Backofens gegenläufig zur Öffnung des zur Verbrennungszone gehörenden Drosselelements das zur Reduktionszone gehörende Drosselelement weiter geschlossen wird.

Wird hingegen eine Erhöhung des Wärmeeintrags im hinteren Teil des Backofens erforderlich, ohne dass insgesamt die Aufheizrate des Backofens gesteigert werden soll, so kann gegenläufig zu einem weiteren Schließen des zur Verbrennungszone gehörenden Drosselelements eine weitere Öffnung des zur Reduktionszone gehörenden Drosselelements durchgeführt werden. Somit erfolgt eine stärkere Verbrennung bereits innerhalb der Holzbrennvorrichtung, so dass aus der Verbrennungszone der Holzbrennvorrichtung in den Backofen die Flamme mit einer erhöhten Temperatur austritt, jedoch nicht so weit in den Backofen hineinreicht.

In besonders vorteilhafter Weise kann ein Systembaukasten realisiert werden, welcher in einer Grundausführung beispielsweise jeweils zwei Backöfen mit jeweils zwei Holzbrennvorrichtungen sowie eine Luftfördereinheit mit zugehöriger Luftverteilung und Drosselelemente umfasst. In einer weiteren Ausführung umfasst der Baukasten drei Backöfen nebst zugehörigen Holzbrennvorrichtungen, eine Luftfördereinheit nebst zugehöriger Luftverteilung und Drosselelemente. Dieses Konzept ist prinzipiell beliebig fortsetzbar. Zur Realisierung einer Backanlage mit beispielsweise geforderten 5 Backöfen können ein Baukasten mit drei Backöfen und ein Baukasten mit zwei Backöfen zum Einsatz kommen.

In der nachfolgenden Figur wird eine beispielhafte Ausführungsform für eine erfindungsgemäße Backvorrichtung skizziert.

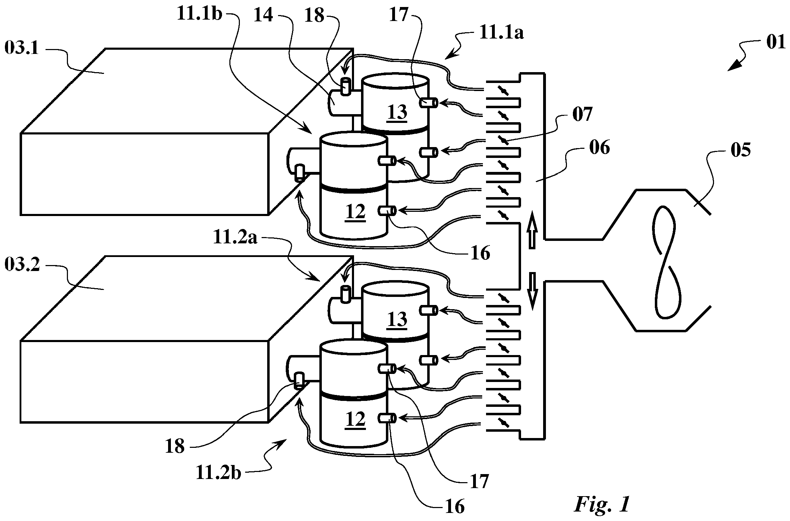

In der **Fig. 1** sind zunächst einmal schematisch zwei Backöfen 03.1 und 03.2 einer erfindungsgemäßen Backvorrichtung 01 skizziert. Wenngleich diese hier beabstandet dargestellt sind, so werden diese in aller Regel unmittelbar übereinander angeordnet. Jeder Backofen 03 weist auf der Rückseite zwei Brenneröffnungen auf, in die die Holzbrennvorrichtungen 11 hineinragen, wobei des Weiteren zu jedem Backofen 03.1, 03.2 zwei Holzbrennvorrichtungen 11.1a, 11.1b sowie 11.2a und 11.2b eingesetzt werden. Die einzelnen Holzbrennvorrichtungen 11 sind hierbei übereinstimmend ausgeführt. Diese weisen unterseitig eine Oxidationszone 12 auf, in der der Holzbrennstoff, in aller Regel Holzpellets, anteilig verbrannt werden können. Darüberliegend befindet sich eine Reduktionszone 13, in der zumindest anteilig unverbrannter Holzbrennstoff in Brenngas umgewandelt werden kann. Aus der Reduktionszone tritt das erzeugte Brenngas sowie das Rauchgas in eine Verbrennungszone 14 ein, welche durch die Brenneröffnung bis in den Backofen 03 hineinreicht. Jede der Zonen 12, 13 und 14 weist eine dieser Zone 12, 13 und 14 zugeordnete Luftzuführung 16, 17 und 18 auf, über die die entsprechend erforderliche Luft bzw. der Sauerstoff zur Verbrennung des Holzbrennstoffs bzw. des Brenngases zugeführt wird.

Im Gegensatz zu den bekannten Ausführungsformen wird eine zentrale Luftfördereinheit 05 eingesetzt, welche den erforderlichen Volumenstrom an Verbrennungsluft für die zugeordneten Holzbrennvorrichtungen 11 der Backvorrichtung 01 zur Verfügung stellt. Hierzu erfolgt eine Verteilung des Luftvolumenstroms von der Luftfördereinheit 05 über Luftkanäle 06 auf die Mehrzahl der Luftzuführungen 16-18. Zur individuellen Anpassung des erforderlichen Luftvolumenstroms auf die einzelnen Zonen 12-14 der Mehrzahl an Holzbrennvorrichtungen 11 wird zwischen den von der Luftfördereinheit 05 kommenden Luftkanälen 06 und den jeweiligen Luftzuführungen 16 bis 18 ein Drosselelement 07 eingesetzt. Die Drosselelemente 07 sowie die zentrale Luftfördereinheit 05 können von einer zentralen Backsteuerung derartig gesteuert werden, dass ein optimaler Betrieb des Backofens 03 und der Holzbrennvorrichtung 11 realisiert wird.

## Patentansprüche

1. Backvorrichtung (01) mit zumindest zwei Backöfen (03.1, 03.2), welche eine auf einer Vorderseite angeordnete verschließbare Einschuböffnung und zumindest zwei auf der Rückseite angeordnete Brenneröffnungen und zumindest eine Rauchgasöffnung aufweisen, und mit zumindest vier Holzbrennvorrichtungen (11.1a, 11.1b, 11.2a, 11.2b), welche eine Oxidationszone (12), in der der Holzbrennstoff anteilig verbrannt werden kann, und eine Reduktionszone (13), in der der Holzbrennstoff anteilig zu Brenngas umgewandelt werden kann, und eine die Brenneröffnung durchgreifende Verbrennungszone (14), in der das Brenngas anteilig verbrannt werden kann, aufweisen, wobei an jede Zone (12-14) eine Luftzuführung (16-18) angeschlossen ist, **dadurch gekennzeichnet, dass** eine zentrale Luftfördereinheit (05) eingesetzt wird, welche über Luftkanäle (06) mit den Luftzuführungen (16-18) der mehreren Holzbrennvorrichtungen (11) verbunden ist, wobei zwischen den Luftkanälen (06) und den Luftzuführungen (16-18) jeweils ein von einer zentralen Backsteuerung motorisch gesteuertes Drosselelement (07) angeordnet ist.

2. Backvorrichtung (01) nach Anspruch 1,
**dadurch gekennzeichnet,**
**dass** jeder Backofen (03.1, 03.2) zumindest zwei Rauchgasöffnungen aufweist, welche auf gegenüberliegenden Seiten des Backofens (03.1, 03.2) angeordnet sind, wobei von jeder Rauchgasöffnung ein Rauchgaskanal zu einem gemeinsamen Rauchgaskamin geführt wird.

3. Backvorrichtung (01) nach Anspruch 2,
**dadurch gekennzeichnet,**
**dass** in jedem Rauchgaskanal eine motorisch von der Backsteuerung steuerbare Rauchgasklappe und/oder im Rauchgaskamin ein von der Backsteuerung regelbarer Ventilator und/oder eine von der Backsteuerung motorisch steuerbare Kaminklappe angeordnet ist.

4. Verfahren zur Steuerung einer Backvorrichtung (01) nach einem der vorhergehenden Ansprüche,
**dadurch gekennzeichnet,**
**dass** zur Erhöhung/Reduzierung der Aufheizrate eines Backofens (03.1, 03.2) die Leistung der Luftfördereinheit (05) erhöht/reduziert wird, wobei die Drosselelemente (07) der zum jeweiligen Backofen (03.1, 03.2) führenden Luftzuführungen (16-18) weiter geöffnet/geschlossen werden.

5. Verfahren nach Anspruch 4,
**dadurch gekennzeichnet,**
**dass** zur Anpassung der Wärmeverteilung innerhalb des Backofens (03) die zur Reduktionszone (13) und zur Verbrennungszone (14) zugehörigen Drosselelemente (07) verstellt werden.

6. Verfahren nach Anspruch 4 oder 5,
**dadurch gekennzeichnet,**
**dass** zur Erhöhung/Reduzierung des Wärmeeintrags im vorderen Teil des Backofens (03.1, 03.2) das zur Verbrennungszone (14) zugehörige Drosselelement (07) weiter geöffnet/geschlossen wird.

7. Verfahren nach einem der Ansprüche 4 bis 6,
**dadurch gekennzeichnet,**
**dass** zur Reduzierung/Erhöhung des Wärmeeintrags im hinteren Teil des Backofens (11) das zur Reduktionszone (13) zugehörige Drosselelement (07) weiter geschlossen/geöffnet wird.

## Claims

1. A baking device (01) comprising at least two baking ovens (03.1, 03.2) which comprise a closable feed opening arranged on a front side and at least two burner openings arranged on the rear side and at least one flue gas opening, and comprising at least four wood-burning devices (11.1a, 11.1b, 11.2a, 11.2b) which have an oxidation zone (12), in which the wood fuel can be proportionately burnt, and a reduction zone (13), in which the wood fuel can be proportionately converted to fuel gas, and a burning zone (14) engaging through the burner opening, in which burning zone (14) fuel gas can be proportionately burnt, an air supply (16-18) being connected to each zone (12-14),
**characterized in that**
a central air conveyor unit (05) is used, which is connected to the air supplies (16-18) of the multiple wood-burning devices (11) via air ducts (06), a throttle element (07) controlled by a motor of a central baking control being arranged between each of the air ducts (06) and the air supplies (16-18).

2. The baking device (01) according to claim 1,
**characterized in that**
each baking oven (03.1, 03.2) comprises at least two flue gas openings which are arranged on opposite sides of the baking oven (03.1, 03.2), a flue gas duct being guided to a shared flue gas chimney starting from each flue gas opening.

3. The baking device (01) according to claim 2,
**characterized in that**,
a flue gas flap controlled by a motor of the baking control is arranged in each flue gas duct and/or a fan controlled by the baking control and/or a chimney flap controlled by a motor of the baking control is/are arranged in the flue gas chimney.

4. A method for controlling a baking device (01) according to any one of the preceding claims,
**characterized in that**
the performance of the air conveyor unit (05) is increased/reduced in order to increase/reduce the heating rate of a baking oven (03.1, 03.2), the throttle elements (07) of the air supplies (16-18) leading to the respective baking oven (03.1, 03.2) being opened/shut further.

5. The method according to claim 4,
**characterized in that**
the throttle elements (07) belonging to the reduction zone (13) and to the burning zone (14) are displaced in order to adjust the thermal distribution within the baking oven (03).

6. The method according to claim 4 or 5,
**characterized in that**
the throttle element (07) belonging to the burning zone (14) is opened/shut further in order to increase/reduce the thermal input in the front part of the baking oven (03.1, 03.2).

7. The method according to any one of the claims 4 to 6,
**characterized in that**
the throttle element (07) belonging to the reduction zone (13) is opened/shut further in order to reduce/increase the thermal input in the rear part of the baking oven (03.1, 03.2).

## Revendications

1. Dispositif (01) de cuisson comprenant au moins deux fours (03.1, 03.2) qui comprennent une ouverture d'introduction disposée sur une face frontale et capable d'être refermée et au moins deux ouvertures de brûleur disposées sur la face arrière et au moins une ouverture de gaz de fumée, et comprenant au moins quatre dispositifs (11.1a, 11.1b, 11.2a, 11.2b) de brûleur à bois de chauffage qui ont une zone (12) d'oxydation, dans laquelle le bois de chauffage peut être brûlé proportionnellement, et une zone (13) de réduction, dans laquelle le bois de chauffage peut être converti proportionnellement en gaz combustible, et une zone (14) de combustion s'engageant à travers l'ouverture de brûleur, le gaz combustible pouvant être brûlé proportionnellement dans ladite zone (14) de combustion, une alimentation (16-18) en air étant raccordée à chaque zone (12-14), **caractérisé en ce qu'**
un convoyeur à air (05) central est utilisé qui est relié aux alimentations (16-18) en air des plusieurs dispositifs (11) de brûleur à bois de chauffage par des conduits (06) d'air, un élément (07) d'étranglement étant disposé entre chaque conduit (06) d'air et chaque alimentation (16-18) en air, ledit élément (07) d'étranglement étant contrôlé par un moteur d'un contrôleur de cuisson central.

2. Dispositif (01) de cuisson selon la revendication 1,
**caractérisé en ce que**
chaque four (03.1, 03.2) comprend au moins deux ouvertures de gaz de fumée qui sont disposées sur des côtés opposés du four (03.1, 03.2), un conduit de gaz de fumée étant guidé à une cheminée de gaz de fumée commune à partir de chaque ouverture de gaz de fumée.

3. Dispositif (01) de cuisson selon la revendication 2,
**caractérisé en ce qu'**
un clapet de gaz de fumée pouvant être contrôlé par un moteur du contrôleur de cuisson est disposé dans chaque conduit de gaz de fumée et/ou un ventilateur pouvant être contrôlé par le contrôleur de cuisson et/ou un clapet de cheminée pouvant être contrôlé par un moteur du contrôleur de cuisson est/sont disposé(s) dans la cheminée de gaz de fumée.

4. Procédé pour contrôler un dispositif (01) de cuisson selon l'une quelconque des revendications précédentes,
**caractérisé en ce que**
la performance du convoyeur à air (05) est augmentée/réduite pour augmenter/réduire le taux de chauffage d'un four (03.1, 03.2), les éléments (07) d'étranglement des alimentations (16-18) en air menant au four (03.1, 03.2) respectif étant ouverts/fermés davantage.

5. Procédé selon la revendication 4,
**caractérisé en ce que**
les éléments (07) d'étranglement appartenant à la zone (13) de réduction et à la zone (14) de combustion sont déplacés pour ajuster la distribution thermique à l'intérieur du four (03).

6. Procédé selon la revendication 4 ou 5,
**caractérisé en ce que**
l'élément (07) d'étranglement appartenant à la zone (14) de combustion est ouvert/fermé davantage pour augmenter/réduire l'apport thermique dans la partie frontale du four (03.1, 03.2).

7. Procédé selon l'une quelconque des revendications 4 à 6, **caractérisé en ce que**
l'élément (07) d'étranglement appartenant à la zone (13) de réduction est ouvert/fermé davantage pour réduire/augmenter l'apport thermique dans la partie arrière du four (03.1, 03.2).
